(19) Europäisches Patentamt
European Patent Office
Office européen des brevets

(11) **EP 2 207 641 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(51) Int Cl.:
***B23K 26/38*** *(2006.01)*  ***F02M 61/16*** *(2006.01)*
***F02M 61/18*** *(2006.01)*  ***B23K 26/06*** *(2006.01)*

(21) Anmeldenummer: **08841491.7**

(22) Anmeldetag: **22.10.2008**

(86) Internationale Anmeldenummer:
**PCT/EP2008/008899**

(87) Internationale Veröffentlichungsnummer:
**WO 2009/053031 (30.04.2009 Gazette 2009/18)**

(54) **VERFAHREN ZUM BOHREN VON FLASCHENÄHNLICHEN LÖCHERN MIT EINER DEFINIERTEN GEOMETRIE MITTELS GEPULSTER LASERSTRAHLUNG**

METHOD FOR BORING BOTTLE-LIKE HOLES HAVING A DEFINED GEOMETRY BY MEANS OF PULSED LASER RADIATION

DISPOSITIF DE FORAGE DE TROUS EN FORME DE BOUTEILLE À GÉOMÉTRIE DÉFINIE AU MOYEN D'UN FAISCEAU LASER PULSÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.10.2007 DE 102007051408**

(43) Veröffentlichungstag der Anmeldung:
**21.07.2010 Patentblatt 2010/29**

(73) Patentinhaber: **PRELATEC GmbH**
**70563 Stuttgart (DE)**

(72) Erfinder:
• **WALTER, Herbert**
**78737 Fluorn-Winzeln (DE)**

• **STAUPENDAHL, Gisbert**
**07751 Jena (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
WO-A-2005/023480      DE-A1- 10 054 853
DE-A1- 10 105 674      DE-A1-102005 019 580
DE-B3-102004 054 587

**EP 2 207 641 B1**

## Beschreibung

Die Erfindung betrifft ein Verfahren zum Bohren von Löchern definierter Geometrien, insbesondere definierter Lochquerschnitte, mittels einer komplexen Lasertechnologie gemäß der im Oberbegriff des Anspruchs 1 (siehe, z.B., DE 101 05 674 A1). Hauptanliegen ist dabei die Erzeugung solcher Lochquerschnitte, durch welche eine optimale Zerstäubung von Fluiden gewährleistet werden kann, wobei das wichtigste Einsatzgebiet das Bohren von Einspritzdüsen für Verbrennungsmotoren ist.

Der Verbrennungsverlauf in Diesel- und Benzinmotoren hängt neben den von der motorischen Seite her vorgegebenen Bedingungen der Brennraumform, Luftbewegung und Düsenlage von einer Vielzahl von Einspritzsystemparametern ab. Dazu zählen die Düsenbauart und die dazugehörige Düsenlochlage, -lochanzahl, - lochlänge zur Zerstäubung des Kraftstoffes in den Brennraum ebenso wie Höhe und zeitlicher Verlauf des Einspritzdrucks.

Die Erhöhung des Gesamtwirkungsgrades des Motors und die Reduktion der Roh-Emission werden folglich in hohem Maße von der Optimierung der Einspritzsysteme bestimmt. Über diesen Parameter kann eine ausschlaggebende Verbesserung des Verbrennungsverlaufes in Diesel- und Benzinmotoren erzielt werden.

Entscheidende Kriterien sind dabei die Reduzierung der Kraftstofftröpfchengröße sowie der Strömungsverluste beim Einspritzvorgang. Kleinere Düsenbohrungen in Verbindung mit höherem Druck führen generell zu einer kleinen Kraftstofftröpfchengröße. Der Bohrungsdurchmesser und die strömungsgünstige Gestaltung der Bohrungen sind dabei die relevanten Parameter.

Zur Umsetzung einer optimalen Gemischaufbereitung wird seit Jahren der Einspritzdruck stetig erhöht und der Düsenlochdurchmesser reduziert. Da dieses Vorgehen Kavitationsphänomene im Düsenloch begünstigt, die die Düse im Extremfall schädigen, aufgrund der vorliegenden Gasphase den Durchfluß der Düse in jedem Fall reduzieren, wird bereits heute mit unterschiedlichen sich stromabwärts verjüngenden Konizitäten der Düsenlöcher gearbeitet. Ferner zeigt sich, daß bei Unterschreiten eines kritischen Lochdurchmessers von ca. 100 μm Verkokungserscheinungen im Düsenloch auftreten, die die Strömung bei steigender Lebensdauer des Aggregates deutlich abnehmen lassen. Es stellt sich nun die Frage, inwiefern man durch gezielte Formgebung des Düsenloches den hydraulischen Wirkungsgrad der Düsen so steigern kann, daß die Effekte der Verkokung und der Kavitation verhindert werden und der Strahlaufbruch für besseren Lufteintrag in das Spray intensiviert wird und somit die Lebensdauer der Düsen erhöht werden kann..

Der gegenwärtige Stand der Technik ist dadurch charakterisiert, daß die Form solcher Löcher, unabhängig davon, ob sie durch mechanisches Bohren, Erodier-, Ultraschall- oder Laserverfahren hergestellt werden, zylindrisch oder konisch mit mehr oder weniger geraden Wänden ist. Auf diese Weise ist es aber nicht möglich, strömungstechnisch optimale Verhältnisse für das Zerstäuben von Fluiden zu schaffen.

Bezüglich der Laserverfahren gibt es in der Patentliteratur zahlreiche Vorschläge zur Verbesserung der Genauigkeiten, insbesondere der Rundheit, der Lochform oder der Reduzierung des negativen Einflusses von Schmelzanteilen auf die Oberflächenqualität der Bohrung, sowie zur Aufweitung des Loches in Einstrahlrichtung. Die Mehrzahl der Betrachtungen erfolgt rein geometrisch-optisch gekoppelt mit geeigneten mechanischen Komponenten.

Da die Parameter eines Laserstrahles, insbesondere seine Intensitätsverteilung, nicht den hohen Anforderungen an die Rundheit z.B. eines Loches in Einspritzdüsen genügen, gibt es mehrere optisch-mechanische Varianten zur Eliminierung dieses Problems. Bereits in der DE - OS 32 17 226 A 1 wird dazu z.B. die Rotation des Strahlungsbündels um die eigene Symmetrieachse vorgeschlagen, was in der DE - OS 197 45 280 A 1 auf drei Module erweitert wird, die vor der Fokussierlinse angeordnet sind und zusätzlich erlauben, den Auftreffpunkt des Strahles auf dem Werkstück und seine Auftreffneigung zu variieren. Ein spezieller Bildrotator wird z.B. in der DE - OS 197 41 029 A 1 beschrieben.

Maßnahmen zur Verbesserung der Oberflächenqualität der Bohrung findet man in der DE - OS 30 07 169 A 1, wo eine ausreichend hohe Erwärmung des Werkstückes während der Laserbearbeitung einen gleichmäßigen Schmelzfilm erzeugen soll, in der DE - OS 27 13 904 A 1, wo ein zweiter Laserstrahl als Schmelzstrahl fungiert und den beim eigentlichen Bohrprozess entstehenden Grat wegschmelzen soll oder in der Patentschrift DE 101 40 533 B 4, wo eine Opferschicht das Bohren mittels ultrakurzer Laserimpulse qualitativ verbessern soll.

Der Lochform, speziell dem Aufweiten des Bohrloches in Strahlrichtung widmet sich die Patentschrift GB 2 227 965 A. Hier wird eine Steuerung des Strahles bezüglich Auftreffwinkel und Abstand zwischen Strahl- und Bohrungsachse mit dem Ziel vorgeschlagen, möglichst variabel konische Löcher unterschiedlicher Wandneigung zu realisieren. Dem gleichen Ziel dienen die mehr theoretischen Betrachtungen zum Intensitätsprofil der Bohrstrahlung in der Patentschrift DE 10 2004 014 820 B4. Der Erzeugung definierter konischer Lochformen mit Aufweitung in Strahlrichtung dient auch die Anordnung, die in Patentschrift DE 199 05 571 C1 beschrieben wird. Ihr Grundgedanke besteht in der synchronen Drehung der Polarisationsrichtung des Laserstrahles mit einer Taumelbewegung des Strahles, die durch eine entsprechende Vorrichtung erzeugt wird.

Der Effektivierung des gesamten Bohrprozesses einerseits bzw. der Erhöhung der Präzision des realisierten Loches andererseits dienen mehrstufige Verfahren, die aus einem ersten Schritt, dem Vorbohren, und einem zweiten Schritt, der Erzeugung der endgültigen Bohrlochform, bestehen. Dabei können eine Kopplung zwischen Laser- und Erodierverfahren genutzt werden, wie es z.B. die Patentschriften EP 0 299 143 A1 und DE 10 2004 054 587 B3 beschreiben, oder aber zwei Laser mit unterschiedlichen Strahleigenschaften wie in der DE - OS 101 44 088 A1 dargestellt, verwendet werden. In der DE 10 2004 054 587 B3 wird u.a. darauf hingewiesen, daß, und hier wird vom Stand der Technik ausgegangen, bei kleinen Einspritzlöchern mit Durchmessern in der Größenordnung 80 $\mu$m etwa 24 Löcher pro Düse zu bohren sind, um auf die erforderlichen Einspritzvolumina pro Zeiteinheit zu kommen. Bei solch großen Lochzahlen ist, neben dem erhöhten Arbeitsaufwand, mit einer erheblichen Beeinträchtigung der Düsenstabilität und damit der Funktionssicherheit und Lebensdauer zu rechnen. Die neuartigen Lochformen gemäß der vorliegenden Erfindung, die nachfolgend genauer beschrieben werden, bringen auch unter diesem Aspekt einen wesentlichen Fortschritt zum Stand der Technik, da durch die relevant reduzierten Strömungswiderstände insbesondere sehr kleiner Löcher auf solch große Lochzahlen verzichtet werden kann, ohne z.B. erhöhte Anforderungen an den Einspritzdruck zu stellen.

Bei allen vorstehend aufgezählten Vorschlägen fehlt die gezielte Berücksichtigung von Merkmalen der Wechselwirkung zwischen Laserstrahlung und Werkstoff, die mit den Welleneigenschaften der Laserstrahlung, insbesondere der Beugung, gekoppelt sind, um zu strömungstechnisch optimalen Lochformen zu kommen. Sie sind deshalb im wesentlichen auf zylindrische Löcher und konische Lochformen mit mehr oder weniger großem Öffnungswinkel beschränkt.

Der vorliegenden Erfindung liegt die Aufgabe zugrunde, ausgehend von den im Oberbegriff des Anspruches 1 genannten technischen Voraussetzungen durch neuartige Lochformen und Verfahren zu ihrer Herstellung weitaus günstigere Möglichkeiten zur Lösung des nach wie vor akuten Problems strömungstechnisch optimaler Lochformen zu schaffen.

Der Grundgedanke ist dabei, sich nicht von den bisher üblichen Lasertechnologien auf Lochformen wie die genannten zylindrischen oder konischen Querschnitte festlegen zu lassen, sondern von strömungstechnisch optimalen Lochformen auszugehen und für deren Erzeugung geeignete Technologien und Verfahren bereitzustellen.

Die Forderungen, die ein strömungstechnisch günstiges Loch zu erfüllen hat, sind klar: Die pro Zeiteinheit zu zerstäubende Fluidmenge sollte mit einem möglichst geringen Strömungswiderstand und folglich relativ niedrigem Druckverlust so bis zur Austrittsöffnung des Loches transportiert werden, daß an dieser Stelle Strömungsgeschwindigkeiten und Strömungsverhältnisse (laminar-turbulent) herrschen, die eine optimale Zerstäubung und damit im konkreten Fall einer Treibstoff-Einspritzdüse eine optimale Verteilung des Fluids im Verbrennungsraum sichern.

Gelöst wird diese Aufgabe mit dem in Anspruch 1 definierten Verfahren.

Nach dem Grundgedanken des erfindungsgemäßen Verfahrens wird eine Bohrlochform erzeugt, welche sich durch drei Abschnitte auszeichnet, die, in Richtung des strömenden Fluids betrachtet, aus einem ersten Abschnitt, dem zylindrischen Teil für den Fluideintritt mit dem Durchmesser $d_E$, einem sich daran anschließenden zweiten Abschnitt, in dem sich dieser Durchmesser verjüngt und schließlich einem dritten Abschnitt, der wieder vorzugsweise zylindrisch ist und den Durchmesser $d_A$ der Fluidaustrittsöffnung besitzt, besteht. Das Bohrloch besitzt folglich eine flaschenähnliche Form, was noch deutlicher wird, wenn man die Längenverhältnisse der einzelnen Abschnitte betrachtet. Der erste Abschnitt (der "Flaschenkörper") soll eine Länge $L_E$ besitzen, die beispielsweise dreimal so groß ist wie die Länge $L_A$ des dritten Abschnittes der Bohrung, des "Flaschenhalses". Die Form des zweiten Abschnittes, des "Übergangsbereiches", soll einen strömungstechnisch günstigen Übergang von Abschnitt 1 zu Abschnitt 3 gewährleisten. Dies geschieht am besten durch einen kontinuierlichen, abgerundeten und kantenfreien Bohrungsverlauf von $d_E$ auf $d_A$. Der Sinn dieser Form wird sofort klar, wenn man den beabsichtigten schnellen Durchfluss eines Fluids durch eine solche Bohrung, insbesondere den schnellen Durchfluss von Treibstoff durch eine Einspritzdüsenöffnung, betrachtet. Grob vereinfacht gesprochen, dient dann der Abschnitt 1 mit seinem relativ großen Durchmesser (das Verhältnis $d_E$ zu $d_A$ sollte vorzugsweise im Intervall 1,3 bis 2,0 liegen) der Zuführung des Fluids mit vergleichsweise geringem Strömungswiderstand an den eigentlichen Teil der Bohrung mit "Düsenfunktion", nämlich die Abschnitte 2 und 3. Die Durchmesserverjüngung im Abschnitt 2 sorgt wegen der Kontinuitätsgleichung der Strömungslehre für eine Erhöhung der Strömungsgeschwindigkeit, die der entscheidende Parameter für eine effektive Zerstäubung des Fluids am Düsenaustritt des Durchmessers $d_A$ ist. Wegen der vergleichsweise geringen Länge $L_A$ von Abschnitt 3 ist der Strömungswiderstand, der hier aufgebaut wird, relativ gering, wenn man z.B. einen Vergleich mit konventionellen Löchern zylindrischen Querschnittes vornimmt. Es ist offensichtlich, daß die beschriebene Flaschenform bei gleichen Strömungsverhältnissen am Düsenausgang, speziell bei gleicher Ausströmungsgeschwindigkeit des Fluids bzw. gleicher pro Zeiteinheit ausströmender Fluidmenge, strömungstechnisch wesentlich günstigere Eigenschaften besitzt, die sich z.B. in einem erheblich geringeren erforderlichen Einspritzdruck im Vergleich zu den herkömmlichen zylindrischen oder konischen Düsenlöchern widerspiegelt.

Die beschriebene Grundform des Bohrloches kann bei Nutzung sämtlicher zur Verfügung stehender optischer und mechanischer Möglichkeiten in weiten Grenzen variiert und damit konkreten Anforderungen angepasst werden. So können beispielsweise die Durchmesser- und Längenverhältnisse in den Grenzen gewählt werden, die in Anspruch 1 näher definiert sind.

Die Erzeugung der dargestellten Bohrlochform gemäß der Erfindung erfordert geeignete Verfahrensschritte, die nachfolgend näher erläutert werden sollen. Neben den im Oberbegriff in Anspruch 1 genannten Parametern und technologischen Schritten, die letztendlich generell zur Erzielung eines qualitativ hochwertigen Bohrloches erforderlich sind, besteht das Wesen des Verfahrens zur Erzeugung solcher Löcher gemäß der Erfindung vor allem in der gezielten Ausnutzung der Ausbreitungseigenschaften der Laserstrahlung im Fokusbereich, also der Kaustik, einerseits, sowie den integralen Absorptions- und Reflexionsverhältnissen im Bohrloch andererseits. Erstere werden durch die Wellenlänge der Strahlung, das Intensitätsprofil der Strahlung am Ort des Fokussierelementes, das i. a. summarisch durch die Strahlqualitätszahl K erfaßt wird, und die Abbildungseigenschaften des Fokussierelementes, das im einfachsten Fall aus einer mit möglichst geringen Abbildungsfehlern behafteten Linse besteht, bestimmt.

Die Absorptions- und Reflexionsverhältnisse im Bohrloch selbst, d.h. in Tiefenbereichen, die größer als der Lochdurchmesser am Strahleintritt sind, erweisen sich als außerordentlich komplex und hängen neben der üblicherweise ausschließlich diskutierten Fresnelabsorption, die bei Kenntnis der optischen Konstanten n und $\kappa$ des Werkstoffes, der Polarisation der Strahlung sowie den Einfallswinkeln der Strahlung theoretisch gut erfasst werden kann, von mehreren Parametern ab, die einer genauen Erfassung schwer zugänglich sind. Dazu gehören z. B. die Absorption der Strahlung durch den im Bohrloch vorhandenen Metalldampf und das laserinduzierte Plasma, aber auch die Streuung der Strahlung durch feinste Werkstoffpartikeln, die zu einer verstärkten (und i. a. unerwünschten) Strahlungsbeaufschlagung der Bohrlochwände führt. Während die Plasmaabsorption speziell bei langwelligen Lasern ($CO_2$-Laser) beträchtliche Werte annehmen kann, ist die Streuung insbesondere bei kurzwelligen Lasern (z. B. Nd:YAG-Laser) zu beachten. Weitere Einflußparameter sind das verwendete Arbeitsgas, die sich beim Bohrprozeß ausbildende Oberflächenstruktur der Bohrlochwände (Rauhigkeit!) und schließlich auch die Wärmeleitungseigenschaften des Werkstoffes.

Um das Wesen der Erfindung klar herausarbeiten zu können, sollen die genannten Sekundäreffekte in den folgenden Betrachtungen vernachlässigt werden und nur die primär entscheidenden Größen Kaustikform und Fresnelabsorption unter dem Aspekt der Erzeugung der Bohrlochformen gemäß der Erfindung diskutiert werden. Als Beispiel soll dabei immer die vorstehend beschriebene Flaschenform dienen.

Die drei oben definierten Bohrlochabschnitte legen in gewisser Weise auch Abschnitte des Bohrprozesses fest, die durch unterschiedliche Bearbeitungsparameter charakterisiert sind. Die jeweiligen Spezifika werden gemäß der Erfindung, wie bereits vorstehend erwähnt, auf die gegebenenfalls zeitlich variierenden Größen **Strahlausbreitung (Kaustikform)** und **Intensität** unter dem Aspekt der Fresnelabsorption im Bohrloch und unter Berücksichtigung der Wellenlänge der Strahlung reduziert. Unter diesen Voraussetzungen läßt sich eine "Flaschenform" auf verschiedenartige Weise erzielen, wobei der Bohrprozeß prinzipiell in zwei Abschnitte unterteilt werden kann, den

- **Vorbohrabschnitt** und den
- **Formgebungsbohrabschnitt.**

**1. Vorbohrabschnitt:**

Dieser erste Teil des Bohrprozesses ist, gemäß der Erfindung, durch zwei Bearbeitungsziele charakterisiert - er soll einerseits bereits den "Flaschenhals" der Bohrung in seiner gewünschten Form weitgehend realisieren und andererseits günstige Voraussetzungen für den zweiten Bohrabschnitt schaffen. Letzteres kann bedeuten, daß z. B. durch eine Sackbohrung definierter Tiefe die Länge des Flaschenhalses und damit der Startpunkt des Aufweitungsbereiches festgelegt wird, oder daß eine Durchgangsbohrung geschaffen wird, die im Bereich des Flaschenhalses in ihren Dimensionen bereits etwa den Vorgaben entspricht, in den Abschnitten 2 und 3 der Bohrung jedoch noch einer Formung bedarf. Für den Vorbohrabschnitt können sowohl Laserstrahlung als auch alternative Verfahren wie spanende Bearbeitung, Erodieren oder Ultraschallbearbeitung genutzt werden.

Beim Einsatz von Laserstrahlung ist typisch, daß der Vorbohrabschnitt i. a. mit Strahlung einer festen Wellenlänge, eines festen Intensitätsprofils, d. h. einer festen K-Zahl und damit letztendlich einer festen Kaustikform im Fokusbereich durchgeführt wird.

**2. Formgebungsbohrabschnitt:**

In diesem zweiten Teil des Bohrprozesses sind, gemäß der Erfindung, der Übergangsbereich und der Bereich des "Flaschenkörpers" gemäß den strömungstechnischen Vorgaben zu schaffen. Dieser Abschnitt bildet einen Schwerpunkt der erfindungsgemäßen Verfahrenslösungen. Das Ziel, die Aufweitung des Bohrloches "nach unten" unter definierten Formvorgaben, kann auf unterschiedliche Weise realisiert werden, erfordert aber in jedem Falle eine geeignete Kaustikform. Diese kann

a) der Kaustik des Vorbohrprozesses entsprechen und folglich während des gesamten Bohr- prozesses konstant gehalten werden,

b) von der Kaustik des Vorbohrprozesses auf eine für das Formgebungsbohren optimierte Kaustikform geändert und während des Formgebungsbohrens bis zum Abschluß des gesamten Bohrprozesses konstant gehalten werden oder schließlich

c) durch eine während des Formgebungsbohrens zeitlich variable Kaustikform gekennzeichnet sein.

Die Anpassung der Kaustikform an den gewünschten Ablauf des Bohrprozesses und damit an die gewünschte Lochform kann, ein zeitlich unveränderliches Fokussierelement vorausgesetzt, durch nachfolgend diskutierte Varianten der Strahlformung realisiert werden.

1. Das Intensitätsprofil bzw. die K-Zahl der Laserstrahlung wird geändert und zwar entweder intern, d. h. im Laserresonator selbst, durch geeignete Maßnahmen wie zeitliche Variation des Pumpprozesses oder Änderung der optischen Resonatorkonfiguration, oder extern, d. h. außerhalb des Laserresonators, z. B. durch Einbringen geeigneter optischer Elemente wie diffraktiver Optiken in den Strahlweg. Da i. a. eine extrem zuverlässige Funktion des Lasers selbst angestrebt wird und Eingriffe in die Laserfunktion vor allem im industriellen Dauerbetrieb die Gefahr von Instabilitäten in sich bergen, sind die externen Methoden der Strahlprofiländerung von besonderem praktischem Interesse. So kann z. B. beim Übergang vom Vorbohr- zum Formgebungsbohrabschnitt schnell, d. h. praktisch ohne Zeitverlust, ein diffraktives optisches Bauelement in den Strahlweg gebracht werden, das den Laserstrahl in der gewünschten Weise formt. Dabei ist ein weiterer Vorteil, daß drastische Änderungen problemlos möglich sind, die durch Eingriffe in die Laserfunktion in dieser Breite nicht realisierbar wären.

2. Der Strahldurchmesser am Ort des Fokussierelementes wird geändert. Durch diese Maßnahme kann einerseits in weiten Grenzen die Divergenz der Strahlung in der Fokusumgebung variiert werden, andererseits wird gleichzeitig der Fokusdurchmesser, der umgekehrt proportional vom Strahldurchmesser am Ort des Fokussierelementes abhängt, beeinflußt.

3. Die Strahldivergenz vor der Fokussierung wird geändert. Proportional dazu ändert sich der Fokusdurchmesser, gleichzeitig aber auch die Fokuslage.

Die Möglichkeiten 2. und 3. lassen sich z. B. mittels variabler Teleskope oder adaptiver Optiken im Strahlweg realisieren.

Bei den vorstehend genannten Varianten der Strahlformung wurde davon ausgegangen, daß **ein** Laser für den Bohrprozeß genutzt wird. Einen wesentlich größeren technologischen Aufwand, dafür aber zahlreiche neue Freiheitsgrade bei der Realisierung optimaler Lochformen im Sinne der Erfindung, bietet der Einsatz z. B. **zweier** Laser, die vorzugsweise unterschiedliche Wellenlänge besitzen und damit neue Möglichkeiten der Anpassung der Form der Fokuskaustik an die Erfordernisse der unterschiedlichen Bohrphasen liefern. Typisch wäre dabei der Einsatz eines Lasers kürzerer Wellenlänge (z. B. im Bereich 1 $\mu$m oder kürzer) für einen präzise geführten Vorbohrprozeß und der Einsatz eines Lasers größerer Wellenlänge (z.B. eines $CO_2$-Lasers bei ca. 10 $\mu$m) für den Formgebungsbohrabschnitt.

Das Grundverfahren zur Erzeugung der geschilderten Lochformen gemäß der Erfindung beruht auf der Nutzung eines einzigen Lasers einer dem Lochdurchmesser angepaßten Wellenlänge, wobei als Faustregel angenommen werden kann, daß für typische Fälle die Wellenlänge etwa eine Größenordnung kleiner als der Lochdurchmesser sein sollte. Verwendet man z. B. $CO_2$-Laser, können Löcher mit Durchmessern der Größenordnung 100 $\mu$m besonders günstig gebohrt werden. In diesem konkreten Beispiel bewirkt die Wellenlängenabhängigkeit der Beugung, daß die Kaustik eines solchen fokussierten Laserstrahles eine wesentlich andere Form besitzt als z.B. bei den meisten für das Bohren solcher Löcher eingesetzten Lasern mit Wellenlängen um ca. 1 $\mu$m. Die zehnfach stärkere Beugung der $CO_2$-Laserstrahlung in Kombination mit einer geeigneten Fokussierung und dem Zusammenspiel der Strahlqualitätszahl K des Lasers sowie den spezifischen an den Bohrlochwänden auftretenden Fresnelabsorptionen sind der Schlüssel für die Ausbildung der gewünschten Flaschenform.

Der gesamte Bohrprozess erfolgt dabei aus **einer** Richtung, wobei speziell bei der Flaschenform die engste Stelle des Bohrloches am Strahleintritt und der aufgeweitete Abschnitt in Strahlrichtung im unteren Teil des durchbohrten Materials liegen. Damit werden z.B. die geometrischen Forderungen für Löcher in einer Einspritzdüse erfüllt.

Für eine aktive Formung des Bohrloches im Verlauf des Bohrprozesses können, wie oben allgemein dargestellt, die Form der Fokuskaustik sowie deren Lage variiert werden. Mögliche Einflüsse der beschriebenen Strahlformungsvarianten auf den Bohrprozeß sollen nachfolgend beispielhaft noch einmal beschrieben werden.

a) Während des Bohrprozesses wird die Strahlqualitätszahl K der Laserstrahlung geändert. So kann beispielsweise der Bohrprozess mit einer relativ niedrigen Strahlqualität und folglich mit einem relativ großen Fokusdurchmesser gestartet werden (Vorbohrabschnitt). Nach dem Bohren des "Flaschenhalses" wird durch eine Erhöhung der K-Zahl eine signifikante Verringerung des Fokusdurchmessers erreicht und damit die im ersten Bohrabschnitt erzeugte scharfe Fluidaustrittskante vor einem schädlichen Aufschmelzen im weiteren Bohrverlauf geschützt. Diese Option ist umso wichtiger, da im Formgebungsbohrabschnitt, also beim Erzeugen der aufgeweiteten Bohrlochteile, mit vergleichsweise hohen Strahlungsintensitäten gearbeitet werden muß.

b) Analoge Resultate kann man durch eine Variation des Laserstrahldurchmessers auf der Fokussierlinse während des Bohrprozesses erzielen. Eine solche Durchmesseränderung kann z.B. mittels geeigneter schneller adaptiver Optiken realisiert werden. Da der Fokusdurchmesser umgekehrt proportional vom Bündeldurchmesser auf der Linse abhängt, werden auf diese Weise sowohl der Fokusdurchmesser als auch die Form der Kaustik geändert. Bei diesem Verfahren könnte man z.B. den Bohrprozeß mit einem vergleichsweise kleinen Strahl- und folglich einem relativ großen Fokusdurchmesser starten. Analog Punkt a) wird dann durch eine Vergrößerung des Strahldurchmessers die Schärfe der Fokussierung verbessert und damit ebenfalls die im Vorbohrabschnitt erzeugte Fluidaustrittskante vor dem schädlichen Aufschmelzen geschützt.

c) Eine andere Möglichkeit des Einsatzes schneller adaptiver Optiken besteht darin, während des Bohrprozesses die Divergenz des auf das Fokussierelement auffallenden Strahlungsbündels zu ändern. Dadurch kann erreicht werden, daß die Fokuslage in einer solchen Größenordnung variiert, daß die Bohrlochform in einer gewünschten Weise beeinflußt wird.

An dieser Stelle soll noch auf die Spezifik der Fertigung sehr kleiner Löcher mit Flaschenform, die z.B. durch Fluid-Austrittsöffnungen mit Durchmessern im Bereich von wenigen 10 $\mu$m charakterisiert sind, eingegangen werden. Dieser Bereich bleibt dem $CO_2$-Laser verschlossen, seine Grenze kann mit etwa 60 $\mu$m angegeben werden. Bei solch kleinen Aperturen macht sich allerdings die Beugung mit ihrem Einfluß auf die Bohrlochform bereits beim Einsatz von Lasern mit Wellenlängen z.B. im Bereich 1 - 2 $\mu$m bemerkbar, so daß für feinste Löcher die vorstehend gemachten, prinzipiellen Überlegungen beispielsweise auch auf den Einsatz von Nd:YAG-Lasern übertragen werden können. Bei Lasern dieser Art kann die Strahlqualitätszahl in weiten Grenzen variiert werden, was z.B. vorteilhaft in Kombination mit der Beugung der Strahlung an der sehr kleinen Fluid-Austrittsöffnung, die im Vorbohrabschnitt realisiert wurde, zur Aufweitung der unteren Abschnitte des Bohrloches nutzbar ist.

Wie bereits angedeutet, kann auch die **Lage** der Fokuskaustik aktiv zur Formung von Bohrlöchern gemäß der Erfindung genutzt werden. So ist es allein durch Änderung der Fokuslage relativ zum Werkstück möglich, außer der geschilderten Flaschenform noch eine Reihe anderer Modifikationen des Lochquerschnittes zu erzeugen. Durch ein Legen des Fokus mehr oder weniger tief in das zu bohrende Material hinein kann z. B. der engste Teil des Bohrloches in das Werkstückinnere gelegt werden. Ein Spezialfall davon ist ein "sanduhrförmiges" Bohrloch, bei dem sich die Bohrlochtaille genau in der Hälfte der Länge des Bohrloches (also der Materialdicke) befindet. Die unterschiedlichsten Zwischenstufen zwischen Flaschenform und Sanduhrform sind ebenfalls realisierbar.

Eine weitere spezielle Lochform gemäß der Erfindung ist dadurch charakterisiert, daß in einem zusätzlichen Verfahrensschritt das rotationssymmetrische Bohrloch mit einer vorzugsweise schlitzförmigen Struktur am Fluidaustritt versehen wird, um das Zerstäubungsverhalten des Fluids so zu steuern, daß z.B. in Verbrennungsmotoren eine optimale Verteilung entsteht. Die Abmessungen dieser schlitzförmigen Struktur können in weiten Grenzen variieren, sollten aber typischerweise in den im Anspruch 10 genannten Intervallen liegen. Diese Zusatzstruktur kann entweder mit dem langwelligen Laser selbst, also vorzugsweise einem $CO_2$-Laser, einem kurzwelligeren Laser oder einem der angeführten alternativen Verfahren erzeugt werden. Für den Spezialfall, daß die zu fertigenden Löcher, z.B. in Einspritzdüsen, auf dem gleichen Lochkreis liegen, kann das Herstellungsverfahren dieser Struktur in der Weise modifiziert werden, daß auf dem Lochkreis der Bohrlöcher eine durchgängige Vertiefung der gewünschten Abmessungen bereits vor dem eigentlichen Bohrprozeß entweder durch definierten Materialabtrag mittels Laserstrahlung oder durch alternative Verfahren eingebracht wird, wobei der Querschnitt dieser Vertiefung im Prinzip beliebige, vorzugsweise aber symmetrisch zum Lochkreis gelegene Formen wie Dreieck, Rechteck, Halbkreis o.ä. besitzen kann.

Um die Qualität des erzeugten Bohrloches im Hinblick auf Oberflächenqualität und Kantengenauigkeit zu optimieren, kann gemäß der Erfindung der Laserbohrprozeß hinsichtlich des Arbeitsgases in zwei Abschnitte unterteilt werden, wobei im ersten Abschnitt die gewünschte Lochform unter Nutzung eines ersten Arbeitsgases, welches die Ausbildung der Lochform unterstützt und den Bohrprozess beschleunigt, erzeugt und im zweiten Abschnitt mittels eines zweiten Arbeitsgases eine Verbesserung der Oberflächenqualität der Bohrungswände realisiert wird. Typische Arbeitsgase wären z.B. Sauerstoff für den ersten und Argon für den zweiten Abschnitt.

Der Gegenstand der Erfindung ist nachstehend anhand von Ausführungsbeispielen, die in den Zeichnungen schematisch dargestellt sind, erläutert. In diesen zeigen:

Figur 1        Querschnitt des Einspritzloches nach einem ersten Ausführungsbeispiel der Erfindung,

Fig. 2a,b      Querschnitt des Einspritzloches nach einem zweiten und dritten Ausführungsbeispiel der Erfindung

Figur 3        Aufsicht und Querschnitt eines Einspritzloches gemäß der Erfindung mit definiertem Querschlitz am Fluidausgang

Figur 4        Kopf einer Einspritzdüse mit Einspritzlöchern gemäß der Erfindung und durchgängigem Querschlitz auf dem Lochkreis am Fluidaustritt

Figur 5    Varianten der Änderung der Fokusgeometrie während des Bohrprozesses a) Variation der K-Zahl der Laserstrahlung während des Bohrprozesses b) Variation des Bündeldurchmessers der Laserstrahlung am Ort des Fokussierelementes während des Bohrprozesses c) Variation der Bündeldivergenz des Laserstrahles am Ort des Fokussierelementes während des Bohrprozesses

Figur 6    Zur Variation von Divergenz (a) bzw. Durchmesser (b) des Laserstrahles am Ort des Fokussierelementes mittels adaptiver Optik

Figur 7    Zweistufiges Bohren eines Einspritzloches gemäß der Erfindung a) Erste Stufe: Sackbohrung b) Erste + zweite Stufe: Komplette Bohrung

Figur 8    Zweistufiges Bohren eines Einspritzloches gemäß der Erfindung a) Erste Stufe: Durchbohrung (Vorbohren) mit kleinem Durchmesser b) Erste + zweite Stufe: Komplette Bohrung

Figur 9    Zweistufiges Bohren eines Einspritzloches gemäß der Erfindung a) Erste Stufe: Bohren des "Flaschenhalses" mit Fokuslage um Betrag $\Delta z$ oberhalb der Werkstückoberfläche b) Erste + zweite Stufe: Komplette Bohrung; bei zweiter Stufe Fokuslage auf Werkstückoberfläche

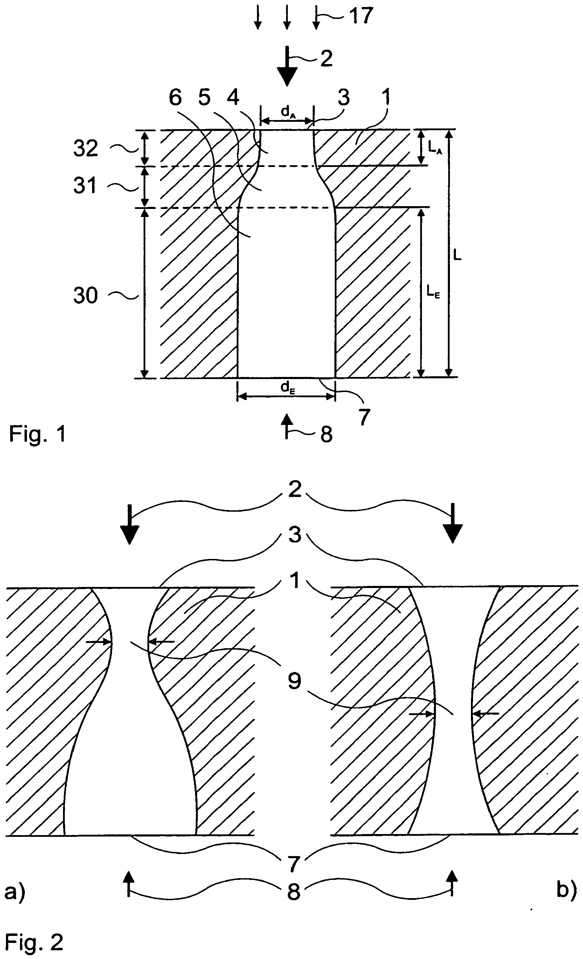

Fig. 1 zeigt den Querschnitt des Düsenloches gemäß der Erfindung in einem ersten Ausführungsbeispiel, welches gleichzeitig die Grundform, nämlich eine "Flaschenform", des Loches wiedergibt. Dieses Loch ist durch drei Teilabschnitte, die sich aus strömungstechnischen
Überlegungen ergeben, charakterisiert. Aus Strömungsrichtung 8 des Fluids betrachtet, besitzt dieses Loch zunächst einen relativ weiten ersten Abschnitt (30) des Durchmessers $d_E$, der sich über eine Länge $L_E$ von der Fluid-Eintrittsöffnung 7 bis zum Übergangsbereich 5, in dem eine Verengung dieses Durchmessers auf $d_A$ erfolgt, erstreckt. Dieser quasizylindrische Fluid-Eintrittsbereich 6 (der "Flaschenkörper") besitzt die Aufgabe, das Fluid mit möglichst geringem Strömungswiderstand und damit geringem Druckverlust bis zum zweiten Abschnitt (31) des Bohrloches, dem Übergangsbereich 5 und letztlich zum dritten und für die Art des Fluidaustritts, z.B. seine Zerstäubung, entscheidenden dritten Abschnitt (32), dem quasizylindrischen Fluid-Austrittsbereich 4 (dem "Flaschenhals") zu transportieren. Ist das Fluid eine praktisch inkompressible Flüssigkeit, erfolgt im Bereich 5 bei vorgegebener Druckdifferenz $p_E - p_A$ ($p_E$ ist der statische Fluid-Druck an der Fluid-Eintrittsöffnung 7, $p_A$ der statische Druck an der Fluid-Austrittsöffnung 3) wegen der Kontinuitätsgleichung der Strömungslehre eine Erhöhung der Strömungsgeschwindigkeit von $v_E$ an der Fluid-Eintrittsöffnung 7 auf $v_A$ an der Fluid-Austrittsöffnung 3. Die Differenz $v_A - v_E$ wird durch das Verhältnis von $d_E$ zum Durchmesser $d_A$ der Fluid-Austrittröffnung 3 bestimmt und es gilt $v_A/v_E = d_E^2/d_A^2$. Im Allgemeinen wird ein möglichst großes $v_A$ bei vorgegebenem $p_E - p_A$ angestrebt, um eine effiziente Zerstäubung des Fluids zu erzielen. Wie groß $v_A$ in der Endkonsequenz ist, hängt neben der Druckdifferenz $p_E - p_A$ vom Gesamtströmungswiderstand des Loches ab. Dessen Länge L ist im wesentlichen durch die Dicke $L_W$ des Werkstoffes 1 vorgegeben, die sich aus Festigkeitsüberlegungen bei der Düsenkonzeption ergibt.
Muss das Loch schräg durch den Werkstoff 1 gebohrt werden, einer typischen Anforderung bei modernen, optimierten Einspritzdüsen, wird $L > L_W$, was natürlich ebenfalls Auswirkungen auf den Strömungswiderstand hat. Hier kommt ein weiterer wesentlicher Vorzug der Düsenform gemäß der Erfindung zum Tragen, der sofort klar wird, wenn man z.B. eine zylindrische Bohrung mit der Flaschenform vergleicht. Während bei der zylindrischen Bohrung die Vergrößerung der Bohrungslänge automatisch zu einer Erhöhung des Strömungswiderstandes führt, ist diese negative Wirkung eines schrägen Bohrloches bei der Flaschenform praktisch vernachlässigbar, da sich bei ihr der Strömungswiderstand vor allem auf den Flaschenhals (4) mit seiner im Vergleich zu L relativ kleinen Länge $L_A$ konzentriert. Letztere kann problemlos durch minimale Änderungen der Bohrparameter so variiert werden, daß sich für alle Löcher einer Düse, unabhängig von ihrer individuellen Neigung zum Lot auf die Werkstückoberfläche, gleicher Strömungswiderstand bzw. gleiche Austrittsgeschwindigkeit und gleiche Austrittsmenge ergeben.
Generell spielt bei der Funktionsoptimierung der Form eines Düsenloches gemäß Fig. 1 die prinzipielle Möglichkeit, bei der Lochfertigung die Parameter $d_E$, $d_A$, $L_A$ und $L_E$ in ausreichend weiten Grenzen variieren zu können, eine große Rolle.
Ebenso wichtig ist die Tatsache, daß das Loch aus **einer** Bearbeitungsrichtung 2 gefertigt werden kann, da bei zahlreichen wichtigen Anwendungsfällen solcher Düsenlöcher, z.B. bei Einspritzdüsen von Verbrennungsmotoren, ein 2-stufiges Bohren von Vorder- und Rückseite durch die Geometrie der Gesamtdüse praktisch unmöglich ist.
Eine wesentliche Rolle im Bohrprozeß spielt das Arbeitsgas 17. Für das Bohren von Löchern in Einspritzdüsen werden, wie bereits vorstehend erwähnt, vorzugsweise Sauerstoff und Argon eingesetzt.
Fig. 2 zeigt zwei weitere typische Ausführungsformen des Bohrloches gemäß der Erfindung bei denen die "Taille" des Bohrloches 9 innerhalb des Werkstückes liegt. Liegt sie genau mittig im Werkstück (Fig. 2b), ergibt sich eine sanduhrähnliche Form.

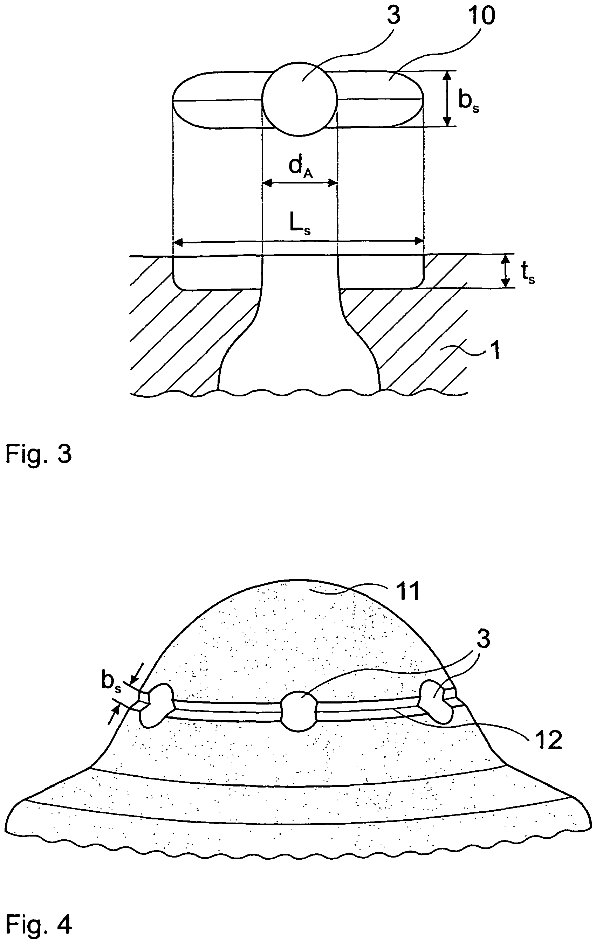

Eine weitere Ausführungsform des Bohrloches gemäß der Erfindung zeigt Fig. 3 in Querschnitt und Draufsicht. Diese Lochform ist durch einen Hilfsschlitz 10 der Breite $b_s$ und der Tiefe $t_s$ charakterisiert, wobei $t_s$ nicht größer als die Länge des Flaschenhalses $L_A$ sein sollte. Seine Funktion besteht in einer definierten Modifizierung der Zerstäubungscharakteristik des runden ursprünglichen Bohrloches 3.

Eine spezielle Ausführungsform von Bohrlöchern mit Hilfsschlitz illustriert Fig. 4. Setzt man z.B. eine Düse voraus, die mehrere Einspritzlöcher besitzt, deren Fluidaustritte alle auf dem gleichen Lochkreis liegen, kann der Hilfsschlitz auch als durchgängiger Hilfsschlitz 12 der Breite $b_s$ durch unterschiedlichste Verfahren, z.B. mittels Laser oder spanende Verfahren, vor dem eigentlichen Bohrprozess hergestellt werden. Der Querschnitt des durchgängigen Hilfsschlitzes 12 kann im Prinzip beliebige, vorzugsweise aber symmetrisch zum Lochkreis gelegene Formen wie Dreieck, Rechteck, Halbkreis o.ä. besitzen.

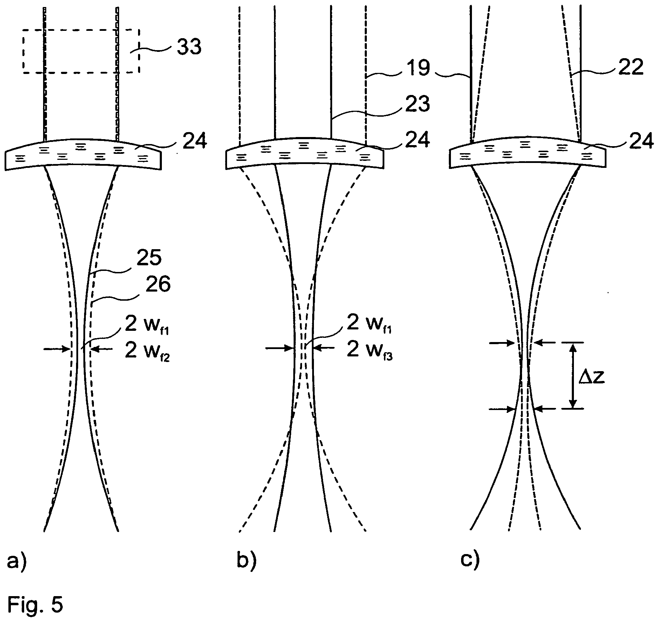

Fig. 5 illustriert drei Varianten, wie die Fokuskaustik während des Bohrprozesses geändert werden kann. Ziel ist dabei auch hier wieder die Realisierung definierter Bohrlochformen.

In Fig. 5a wird gezeigt, wie sich der Fokusdurchmesser $2w_{f1}$ eines ersten Strahles 25 mit der Strahlqualitätszahl $K_1$ auf einen Fokusdurchmesser $2w_{f2}$ vergrößert, wenn die Strahlqualitätszahl $K_2$ des modifizierten Strahles 26 kleiner ist als $K_1$. Die Änderung der Strahlqualitätszahl kann dabei entweder intern, d. h. durch Eingriffe in den Laserprozeß selbst, oder extern, d. h. auf dem Strahlweg vom Laser zum Werkstück, z. B. durch Einbringen eines diffraktiven optischen Elementes 33, erfolgen. Die anderen Strahlparameter werden hierbei als konstant vorausgesetzt.

Fig. 5b zeigt den Einfluss der Änderung des Strahldurchmessers auf der Fokussierlinse 24 während des Bohrprozesses auf den jeweiligen Fokusdurchmesser. Während der Originallaserstrahl 19 mit größerem Durchmesser den scharfen Fokusdurchmesser $2w_{f1}$ ergibt, resultiert aus einer Verringerung des Strahldurchmessers auf der Linse (Strahl 23) eine Vergrößerung des Fokusdurchmessers $2w_{f3}$. Deutlich ist hier zu sehen, wie stark sich die gesamte Form der Fokuskaustik ändert, was den gewünschten signifikanten Einfluss auf die Lochform erzeugt.

Fig. 5c schließlich zeigt den Einfluss einer Änderung der Divergenz des Laserstrahles während des Bohrprozesses auf die Fokuslage. Der Laserstrahl 22 mit einer Divergenz, die gegenüber dem Originalstrahl 19 vergrößert wurde, besitzt eine Fokuslage, die um den Betrag $\Delta z$ gegenüber dem Fokus des Originalstrahles in Richtung Abstandsvergrößerung von der Fokussierlinse verschoben ist.

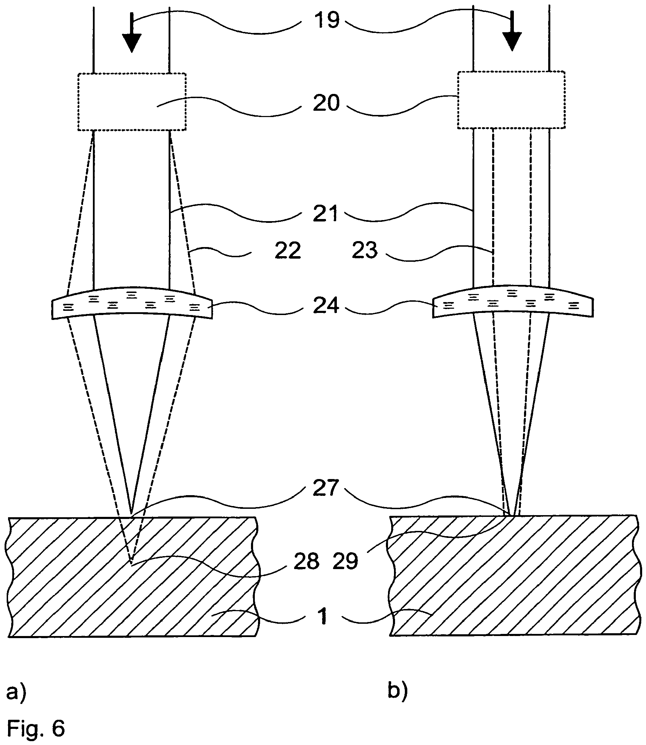

Fig. 6 illustriert die beiden letztgenannten Varianten der Strahlmodifikation etwas genauer. Hier wurde angenommen, dass der Originalstrahl 19 mittels einer adaptiven Optik 20 in der Weise verändert werden kann, dass ein Laserstrahl mit veränderter Divergenz 22 (Fig. 6a) oder ein Laserstrahl mit verändertem Durchmesser 23 (Fig. 6b) resultiert, die jeweils von der Fokussierlinse 24 in Richtung Werkstück 1 fokussiert werden. Im Fall a) sind dabei die Fokuslage 27 des unbeeinflussten Strahles 21 und die Fokuslage 28 des Laserstrahles mit veränderter Divergenz 22 verschieden, im Fall b) besitzt der Laserstrahl mit verringertem Durchmesser 23 einen im Vergleich zum Originalfokus vergrößerten Durchmesser 29.

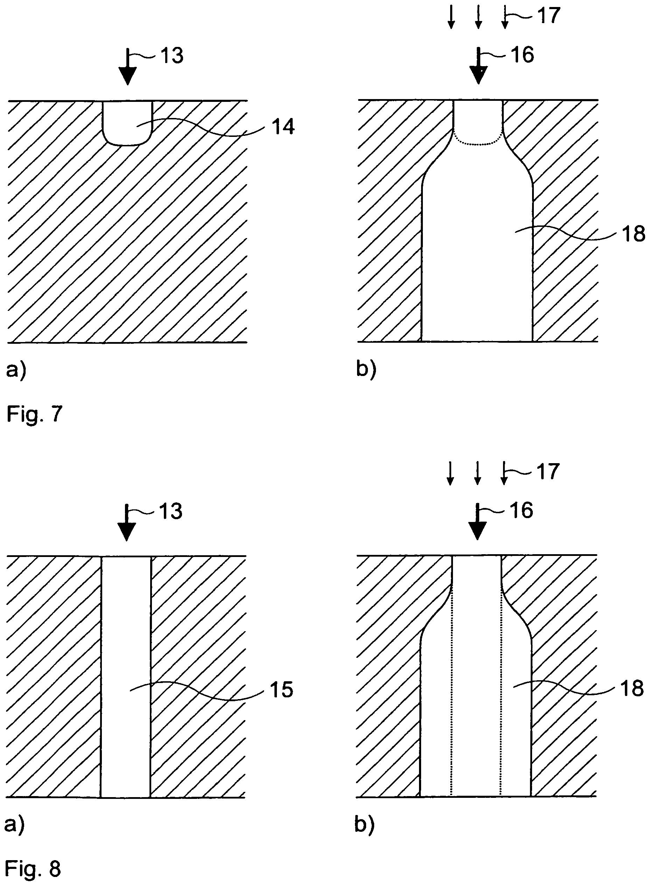

Fig. 7 zeigt eine Möglichkeit des Bohrens der gewünschten Löcher mittels eines zweistufigen Verfahrens gemäß der Erfindung, bei dem der gesamte Bohrprozess in einen Vorbohrabschnitt und einen Formgebungsbohrabschnitt unterteilt wird. Fig. 7a illustriert das im ersten Verfahrensschritt entstandene vorgebohrte Sackloch 14, welches beispielsweise mittels eines Lasers kurzwelliger Strahlung oder alternativer Verfahren, wie spanende Bearbeitung, Funkenerosion oder Präzisions-Ultraschallbearbeitung hergestellt wird. Im zweiten Verfahrensschritt (Fig. 7b) erfolgt beispielsweise mittels eines Lasers langwelliger Strahlung, insbesondere eines $CO_2$-Lasers, das Aufbohren des Loches 18 auf die endgültige Form.

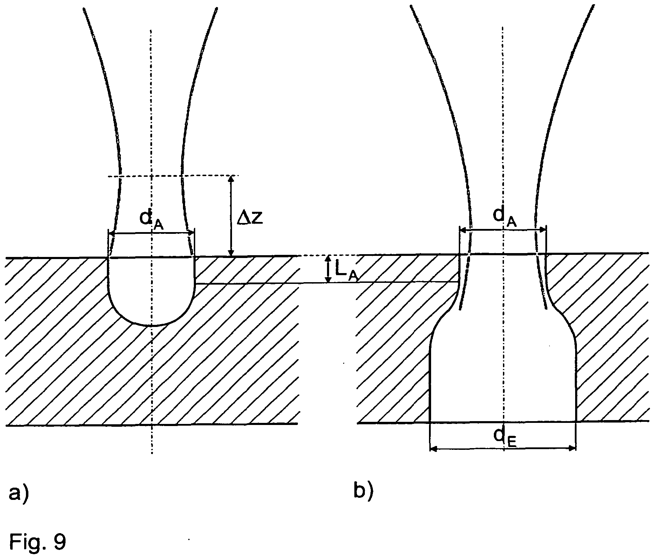

Analog ist die in Fig. 8 illustrierte Vorgehensweise. Der einzige Unterschied besteht darin, dass im ersten Verfahrensschritt mittels eines der oben genannten Verfahren eine komplette Durchbohrung 15 des Werkstückes erfolgt, die im zweiten Verfahrensschritt wieder auf die Endform 18 aufgeweitet wird. Eine weitere Modifikation der zweistufigen Vorgehensweise veranschaulicht Fig. 9. Hauptanliegen ist hier der optimale Schutz des in der ersten Bohrphase erzeugten scharfen oberen Randes der Bohrung mit dem Durchmesser $d_A$. Wie Fig. 9b zeigt, wurde dabei die Fokustaille um einen definierten Betrag $\Delta z$ über die Werkstückoberfläche gelegt. Im zweiten Verfahrensschritt macht man sich nun zu Nutze, dass auf diese Weise $d_A$ etwas größer ist als der Durchmesser der Strahltaille. Schiebt man nämlich nun den Fokusort um den Betrag $\Delta z$ nach unten, folglich auf die Werkstückoberflache, wird der scharfe obere Rand des Loches nur noch von so schwachen Randstrahlen des Bündels getroffen, dass kein Aufschmelzen erfolgt. Gleichzeitig sind für die Aufbohrung des Loches auf die endgültige Form mit dem Fluideintrittsdurchmesser $d_E$ optimale Voraussetzungen geschaffen.

Bezugszeichenliste

1    Werkstoff

2 Bearbeitungsrichtung

3 Fluid-Austrittsöffnung

4 Quasi-zylindrischer Fluid-Austrittsbereich ("Flaschenhals")

5 Übergangsbereich

6 Quasi-zylindrischer Fluid-Eintrittsbereich ("Flaschenkörper")

7 Fluid-Eintrittsöffnung

8 Strömungsrichtung des Fluids

9 "Taille" des Bohrloches

10 Hilfsschlitz

11 Einspritzdüsenkörper

12 durchgängiger Hilfsschlitz für Fluid-Zerstäubung

13 Bearbeitungsrichtung für Vorbohren

14 vorgebohrtes Sackloch

15 vorgebohrtes Durchgangsloch

16 Bearbeitungsrichtung für Endbearbeitung

17 Arbeitsgas

18 fertiges Loch

19 Original-Laserstrahl

20 Adaptive Optik

21 Zustand 1 des Laserstrahles nach adaptiver Optik

22 Laserstrahl mit veränderter Divergenz

23 Laserstrahl mit verändertem Durchmesser

24 Fokussierlinse

25 Laserstrahl mit Strahlqualitätszahl $K_1$

26 Laserstrahl mit Strahlqualitätszahl $K_2 < K_1$

27 Fokusspot des Laserstrahls 21

28 veränderte Fokuslage des Laserstrahls 22

29 veränderter Fokusdurchmesser des Laserstrahls 23

30 Erster Abschnitt des Bohrloches

| 31 | Zweiter Abschnitt des Bohrloches |
|---|---|
| 32 | Dritter Abschnitt des Bohrloches |
| 33 | Diffraktives optisches Element |
| $b_s$ - | Breite des Hilfsschlitzes für Fluidzerstäubung |
| $d_A$ - | Durchmesser der Fluid-Austrittsöffnung |
| $d_E$ - | Durchmesser der Fluid-Eintrittsöffnung |
| $d_T$ - | Durchmesser der Bohrlochtaille |
| L - | Länge der Bohrung |
| $L_A$ - | Länge des "Flaschenhalses" |
| $L_E$ - | Länge des "Flaschenkörpers" |
| $L_S$ - | Länge des Hilfsschlitzes für Fluid-Zerstäubung |
| $t_S$ - | Tiefe des Hilfsschlitzes für Fluid-Zerstäubung |
| $v_A$ - | Strömungsgeschwindigkeit an der Fluid-Austrittsöffnung |
| $v_E$ - | Strömungsgeschwindigkeit an der Fluid-Eintrittsöffnung |
| $2w_{f1}$ - | Fokusdurchmesser des Strahles mit K-Zahl $K_1$ |
| $2w_{f2}$ - | Fokusdurchmesser des Strahles mit K-Zahl $K_2 < K_1$ |
| $2w_{f3}$ - | Fokusdurchmesser des Strahles mit reduziertem Durchmesser |
| $\Delta z$ - | Verschiebung der Fokuslage |

## Patentansprüche

1. Verfahren zum Bohren von Löchern (9,18) in einem Durchmesserbereich von 20 $\mu$m bis 500 $\mu$m mittels Laserstrahlung (19) unter Ausnutzung einerseits der Strahlqualität von Laserstrahllungsquellen sowie andererseits der Polarisation der Strahlung (19), der Parameter der eingesetzten Laserimpulse sowie der Art und Druckes des eingesetzten Arbeitsgases, **dadurch gekennzeichnet, dass** das Verhältnis des Strahldurchmessers am Ort des Fokussierelements und dessen Brennweite, das zwischen 1 und 6 liegt, so in Abstimmung mit der Strahlqualitätszahl K und der Wellenlänge $\lambda$ erfolgt, dass ein Bohrloch (9,18) der Länge L entsteht, dessen Form flaschenähnlich ist und durch einen kleineren oberen Durchmesser $d_A$, einen sich daran anschließenden Flaschenhals (4) der Länge $L_A$ mit nachfolgender Aufweitung in einem Übergangsbereich (5) auf einen Durchmesser $d_E$ und den das Hauptvolumen des gesamten Bohrlochs (9,18) ausmachenden zylindrischen oder sich leicht bis zum unteren Ende des Bohrlochs, der Fluid-Eintrittsöffnung (7), aufweitenden Teil (6) charakterisiert ist, wobei das Verhältnis der Länge des Bohrloches (9,18) zum Durchmesser der Fluid-Austrittsöffnung $L/d_A$ 2 bis 20 beträgt und das Verhältnis der Länge des Bohrloches (9,18) zur Länge des Flaschenhalses $L/L_A$ im Intervall von 3 bis 10 liegt und dass der Bohrprozess in einen ersten Abschnitt, den Vorbohrabschnitt, der einerseits bereits den Flaschenhals der Bohrung in seiner gewünschten Form weitgehend realisieren und andererseits günstige Voraussetzungen für den zweiten Bohrabschnitt schaffen soll, und einen zweiten Abschnitt, den Formgebungsbohrabschnitt, in welchem der Übergangsbereich und der Bereich des Flaschenkörpers gemäß den strömungstechnischen Vorgaben zu schaffen sind, unterteilt ist.

2. Verfahren nach Anspruch 1,
   **dadurch gekennzeichnet**, dass das Verhältnis des Durchmessers der Fluid-Eintrittsöffnung zum Durchmesser der Fluid-Austrittsöffnung $d_E/d_A$ im Intervall 1,3 bis 2,0 liegt,

3. Verfahren nach Anspruch 1,
**dadurch gekennzeichnet, dass** das Bohrloch (9) sanduhrförmig ist und seine Taille mit dem Durchmesser $d_T$ in der Hälfte der Länge des Bohrloches liegt, wobei sich das Bohrloch vorzugsweise in Richtung der Fluid-Eintrittsöffnung (7) und der Fluid-Austrittsöffnung (3) symmetrisch aufweitet und die Verhältnisse zwischen dem Durchmesser der Fluid-Eintrittsöffnung zum Durchmesser der Bohrlochtaille $d_E/d_T$ sowie zwischen dem Durchmesser der Fluid-Austrittsöffnung zum Durchmesser der Bohrlochtaille $d_A/d_T$ vorzugsweise im Intervall 1,3 bis 2,0 liegen.

4. Verfahren nach Anspruch 1,
**dadurch gekennzeichnet, dass** das Bohrloch (9) sanduhrförmig ist und seine Taille mit dem Durchmesser $d_T$ sich in der oberen Hälfte des Bohrloches befindet, wobei das Verhältnis des Durchmessers der Fluid-Austrittsöffnung zum Durchmesser der Bohrlochtaille $d_A/d_T$ vorzugsweise im Intervall 1,1 bis 1,5 und das Verhältnis des Durchmessers der Fluid-Eintrittsöffnung zum Durchmesser der Bohrlochtaille $d_E/d_T$ vorzugsweise im Intervall 1,3 bis 2,0 liegt.

5. Verfahren nach Anspruch 1 bis 4,
**dadurch gekennzeichnet, dass** der Bohrprozess mit langwelliger Strahlung, vorzugsweise eines $CO_2$- Lasers, durchgeführt wird.

6. Verfahren nach Anspruch 1,
**dadurch gekennzeichnet, dass** mit einem Laser kurzwelliger Strahlung vorzugsweise mit einer Wellenlänge von 0,3 $\mu$m bis 2 $\mu$m der Vorbohrabschnitt der Bohrung mit dem Durchmesser $d_A$ einschließlich des Flaschenhalses (4) und mit einem Laser langwelliger Strahlung, vorzugsweise mit einem $CO_2$-Laser, im Formgebungsbohrabschnitt die aufgeweiteten Abschnitte des Übergangsbereichs (5) und des Fluid-Eintrittsbereichs (6) der Bohrung erzeugt werden.

7. Verfahren nach Anspruch 1,
**dadurch gekennzeichnet, dass** mittels spanender Bearbeitung, Funkenerosion oder Präzisions-Ultraschallbearbeitung der Vorbohrabschnitt der Bohrung des Durchmessers $d_A$ einschließlich des Flaschenhalses (4) und mittels eines Lasers langwelliger Strahlung, vorzugsweise eines $CO_2$ -Lasers, im Formgebungsbohrabschnitt die aufgeweiteten Abschnitte des Übergangsbereichs (5) und des Fluid-Eintrittsbereichs (6) der Bohrung erzeugt werden.

8. Verfahren nach Anspruch 1,
**dadurch gekennzeichnet, dass** im Vorbohrabschnitt mittels des Lasers kurzwelliger Strahlung bzw. mittels spanender Bearbeitung, Funkenerosion oder Präzisions-Ultraschallbearbeitung eine komplette Durchbohrung des Werkstückes mit dem kleinsten freien Durchmesser des Bohrloches erfolgt und im Formgebungsbohrabschnitt die gewünschten Aufweitungen des Bohrloches mittels eines Lasers langwelliger Strahlung, vorzugsweise eines $CO_2$-Lasers, erzeugt werden.

9. Verfahren nach einem der Ansprüche 1 bis 8,
**dadurch gekennzeichnet, dass** für den Formgebungsabschnitt ein Laser kurzwelliger Strahlung, vorzugsweise im Wellenlängenbereich 0,3 bis 2 $\mu$m, und kleiner Strahlqualitätszahl K, wobei vorzugsweise K < 0,2 ist, benutzt wird.

10. Verfahren nach einem der Ansprüche 1 bis 9,
**dadurch gekennzeichnet, dass** in einem zusätzlichen Verfahrensschritt das rotationssymmetrische Bohrloch (18) im Bereich der Fluid-Austrittsöffnung (3) durch Schlitze (10) erweitert wird, deren Abmessungen in folgenden Intervallen liegen:

```
Schlitzbreite b_s = (0,5 - 1) x Durchmesser der Fluid-
Austrittsöffnung d_A


Schlitzlänge L_s = (1,5 - 3) x Durchmesser der Fluid-
Austrittsöffnung d_A
```

$$\text{Schlitztiefe } t_s = (0,1 - 0,3) \times \text{Länge der Bohrung } L.$$

**11.** Verfahren nach Anspruch 10,
**dadurch gekennzeichnet, dass** die Schlitze (10) im Anschluss an das Bohren des rotationssymmetrischen Teils des Bohrloches (18) mittels des langwelligen Lasers, vorzugsweise eines $CO_2$-Lasers, oder des kurzwelligen Lasers oder durch spanende Bearbeitung, Funkenerosion oder Präzisions-Ultraschallbearbeitung erzeugt werden.

**12.** Verfahren nach Anspruch 9,
**dadurch gekennzeichnet, dass** die Bohrlöcher auf einem einheitlichen Lochkreis (12) vorgesehen sind und dass auf dem Lochkreis eine durchgängige Vertiefung der Breite $b_s$, welche im Intervall (0,5 - 1) x Durchmesser der Fluid-Austrittsöffnung $d_A$, liegt und einer Tiefe $t_s$, die im Intervall (0,5 - 2) x Durchmesser der Fluid-Austrittsöffnung $d_A$ liegt, vor oder nach dem Bohrprozess entweder durch Materialabtrag mittels Laserstrahlung oder durch spanende Bearbeitung, Funkenerosion oder Präzisions-Ultraschallbearbeitung eingebracht wird, wobei der Querschnitt dieser Vertiefung vorzugsweise symmetrisch zum Lochkreis (12) gelegene Formen wie Dreieck, Rechteck, Halbkreis oder dergleichen besitzt.

**13.** Verfahren nach einem der Ansprüche 1 bis 4,
**dadurch gekennzeichnet, dass** während des Bohrprozesses der Bündeldurchmesser des Laserstrahles (19) am Ort des Fokussierelementes (24) variiert wird.

**14.** Verfahren nach einem der Ansprüche 1 bis 4,
**dadurch gekennzeichnet, dass** während des Bohrprozesses die Bündeldivergenz des LaserStrahles (19) am Ort des Fokussierelementes (24) variiert wird.

**15.** Verfahren nach einem der Ansprüche 1 bis 4,
**dadurch gekennzeichnet, dass** während des Bohrprozesses die Strahlqualitätszahl des Laserstrahles (19) geändert wird.

**16.** Verfahren nach einem der Ansprüche 13 und 14,
**dadurch gekennzeichnet, dass** die Variation des Durchmessers bzw. der Divergenz des Laserstrahles mittels einer adaptiven Optik (20) erfolgt.

**17.** Verfahren nach Anspruch 15,
**dadurch gekennzeichnet, dass** die Strahlqualitätszahl des Laserstrahls (25 bzw. 26) entweder im Laserresonator oder auf dem Strahlweg vom Laser zur Fokussierlinse (24), vorzugsweise durch wahlweises Einbringen eines diffraktiven optischen Elementes (33) in den Strahlengang, geändert wird.

**18.** Verfahren nach einem der Ansprüche 1 bis 17,
**dadurch gekennzeichnet, dass** der Laserbohrprozess in zwei Abschnitte unterteilt wird, wobei im ersten Abschnitt die gewünschte Lochform unter Nutzung eines ersten Arbeitsgases, vorzugsweise von Sauerstoff, welches die Ausbildung der Lochform unterstützt und den Bohrprozess beschleunigt, erzeugt und im zweiten Abschnitt mittels eines zweiten Arbeitsgases, vorzugsweise von Argon, die Oberflächenqualität der Bohrungswände verbessert wird.

**Claims**

**1.** A method of drilling holes (9, 18) in a diameter range of from 20 $\mu$m to 500 $\mu$m by means of laser radiation (19) whilst using the radiation quality of laser radiation sources on the one hand and the polarization of the radiation (19), the parameters of the laser pulses used and the nature and pressure of the working gas used on the other hand, **characterized in that** the ratio of the beam diameter at the location of the focusing element and the focal length thereof - which is between 1 and 6 - occurs in agreement with the beam quality figure K and the wavelength $\lambda$ in such a way that a drill hole (9, 18) of the length L is formed, the shape of which is similar to a bottle and is **characterized by** a smaller upper diameter $d_A$, an adjoining bottle neck (4) of the length $L_A$ with a following widening in a transition region (5) to a diameter $d_E$ and the cylindrical part (6) which makes up the main volume of the entire drill hole (9, 18) or which widens slightly to the lower end of the drill hole, the fluid inlet opening (7), wherein the ratio of the length of the drill hole (9, 18) to the diameter of the fluid outlet opening $L/d_A$ amounts to from 2 to 20 and the ratio of the length of the drill hole (9, 18) to the length of the bottle neck $L/L_A$ is in the range of from 3 to 10, and the drilling process is divided into a first portion, the preliminary drilling portion, which is substantially to form the bottle neck of the bore in its desired shape on the one hand and is to produce advantageous pre-conditions for the second portion of the bore on the other hand, and into a second portion, the shaping drilling portion, in which the transition region and the region of the bottle body are to be produced in accordance with the guidelines on flow technology.

2. A method according to claim 1, **characterized in that** the ratio of the diameter of the fluid inlet opening to the diameter of the fluid outlet opening $d_E/d_A$ is in the range of from 1.3 to 2.0.

3. A method according to claim 1, **characterized in that** the drill hole (9) is in the shape of an hourglass and its waist with the diameter $d_T$ is at half the length of the drill hole, wherein the drill hole preferably widens symmetrically in the direction of the fluid inlet opening (7) and the fluid outlet opening (3), and the ratios between the diameter of the fluid inlet opening [and] the diameter of the waist of the drill hole $d_E/d_T$ and between the diameter of the fluid outlet opening [and] the diameter of the waist of the drill hole $d_A/d_T$ are preferably in the range of from 1.3 to 2.0.

4. A method according to claim 1, **characterized in that** the drill hole (9) is in the shape of an hourglass and its waist with the diameter $d_T$ is situated in the upper half of the drill hole, wherein the ratio of the diameter of the fluid outlet opening to the diameter of the waist of the drill hole $d_A/d_T$ is preferably in the range of from 1.1 to 1.5 and the ratio of the diameter of the fluid inlet opening to the diameter of the waist of the drill hole $d_E/d_T$ is preferably in the range of from 1.3 to 2.0.

5. A method according to claims 1 to 4, **characterized in that** the drilling process is carried out with long-wave radiation, preferably of a $CO_2$ laser.

6. A method according to claim 1, **characterized in that** the preliminary drilling portion of the bore with the diameter $d_A$ including the bottle neck (4) is produced with a laser of short-wave radiation preferably with a wavelength of from 0.3 $\mu$m to 2 $\mu$m and the widened portions of the transition region (5) and the fluid inlet region (6) of the bore are produced with a laser of long-wave radiation, preferably with a $CO_2$ laser, in the shaping drilling portion.

7. A method according to claim 1, **characterized in that** the preliminary drilling portion of the bore with the diameter $d_A$ including the bottle neck (4) is produced by means of machining, spark erosion or precision ultrasonic machining and the widened portions of the transition region (5) and the fluid inlet region (6) of the bore are produced by means of a laser of long-wave radiation, preferably a $CO_2$ laser, in the shaping drilling portion.

8. A method according to claim 1, **characterized in that** a complete through drilling of the workpiece with the smallest internal diameter of the drill hole is carried out in the preliminary drilling portion by means of the laser of short-wave radiation or by means of machining, spark erosion or precision ultrasonic machining respectively and the desired widened portions of the drill hole are produced in the shaping drilling portion by means of a laser of long-wave radiation, preferably a $CO_2$ laser.

9. A method according to any one of claims 1 to 8, **characterized in that** a laser of short-wave radiation, preferably in the wavelength range of from 0.3 to 2 $\mu$m, and a small beam quality figure K, in which K is preferably < 0.2, is used for the shaping drilling portion.

10. A method according to any one of claims 1 to 9, **characterized in that** in an additional method step the rotationally symmetrical drill hole (18) is widened in the region of the fluid outlet opening (3) by slots (10), the dimensions of which lie in the following ranges:

```
slot width b_S = (0.5 - 1) × diameter of the fluid
outlet opening d_A


slot length L_S = (1.5 - 3) × diameter of the fluid
outlet opening d_A
```

```
slot depth t_S = (0.1 - 0.3) × length of the bore L.
```

**11.** A method according to claim 10, **characterized in that** the slots (10) are produced following the drilling of the rotationally symmetrical part of the drill hole (18) by means of the long-wave laser, preferably a $CO_2$ laser, or the short-wave laser or by machining, spark erosion or precision ultrasonic machining.

**12.** A method according to claim 9, **characterized in that** the drill holes are provided on a uniform circle (12) of holes, and a continuous depression of the width $b_S$, which lies in the range (0.5 - 1) $\times$ diameter of the fluid outlet opening $d_A$, is present on the circle of holes, and of a depth $t_S$, which lies in the range (0.5 - 2) $\times$ diameter of the fluid outlet opening $d_A$, is formed before or after the drilling process either by the removal of material by means of laser radiation or by machining, spark erosion or precision ultrasonic machining, wherein the cross-section of this depression preferably has shapes symmetrical to the circle (12) of holes, such as a triangle, a rectangle, a semicircle or the like.

**13.** A method according to any one of claims 1 to 4, **characterized in that** during the drilling process the bundle diameter of the laser beam (19) is varied at the location of the focusing element (24).

**14.** A method according to any one of claims 1 to 4, **characterized in that** during the drilling process the bundle divergence of the laser beam (19) is varied at the location of the focusing element (24).

**15.** A method according to any one of claims 1 to 4, **characterized in that** during the drilling process the beam quality figure of the laser beam (19) is altered.

**16.** A method according to one of claims 13 and 14, **characterized in that** the variation of the diameter or the divergence of the laser beam is carried out by means of an adaptive optics arrangement (20).

**17.** A method according to claim 15, **characterized in that** the beam quality figure of the laser beam (25 or 26 respectively) is altered either in the laser resonator or on the beam path from the laser to the focusing lens (24), preferably by the optional introduction of a diffractive optical element (33) into the optical path.

**18.** A method according to any one of claims 1 to 17, **characterized in that** the laser drilling process is divided into two portions, wherein the desired hole shape is produced whilst using a first working gas, preferably oxygen, which assists the formation of the hole shape and accelerates the drilling process in the first portion, and the surface quality of the bore walls are improved by means of a second working gas, preferably argon, in the second portion.

**Revendications**

**1.** Procédé de forage de trous (9, 18) dans une plage de diamètres de 20 $\mu$m à 500 $\mu$m par rayonnement laser (19) en utilisant d'une part, la qualité du rayonnement de la source de rayonnement laser et d'autre part, la polarisation du rayonnement (19), les paramètres des impulsions laser mises en oeuvre ainsi que le type et la pression du gaz de travail mis en oeuvre,
**caractérisé en ce que**
le rapport du diamètre du rayonnement à l'emplacement de l'élément de focalisation et de sa distance focale qui est situé entre 1 et 6, résulte du réglage de l'indice K de qualité du rayonnement et de sa longueur d'onde λ de façon à obtenir un trou de forage (9, 18) de longueur L dont la forme est similaire à celle d'une bouteille, et est **caractérisé par** un diamètre supérieur $d_A$ plus petit, un goulot (4) de longueur LA qui s'y raccorde avant de s'élargir dans une zone de transition (5) a un diamètre $d_E$, et par la partie (6) qui constitue le volume principal de l'ensemble du trou de forage, et est de forme cylindrique ou va légèrement en s'élargissant jusqu'à l'extrémité inférieure du trou de forage correspondant à l'ouverture d'entrée du fluide (7), le rapport de la longueur du trou de forage (9, 18) au diamètre de l'ouverture de sortie du fluide L/$d_A$ étant de 2 à 20, et le rapport de la longueur du trou de forage (9, 18) à la longueur du goulot de la bouteille L/$L_A$ étant situé dans un intervalle de 3 à 10, et en ce que le processus de forage est subdivisé en une première étape, l'étape de préforage permettant d'une part de réaliser déjà largement le goulot de la bouteille du forage dans sa forme souhaitée, et d'autre part de procurer des conditions favorables pour la seconde étape de forage, et, une seconde étape, l'étape de mise en forme par forage pendant laquelle la zone de transition et la zone du corps de la bouteille doivent étre obtenues selon les données de la technique des fluides.

**2.** Procédé conforme à la revendication 1,
**caractérisé en ce que**
le rapport entre le diamètre de l'ouverture d'entrée du fluide et le diamètre de l'ouverture de sortie du fluide $d_E/d_A$ est situé dans l'intervalle de 1,3 à 2,0.

**3.** Procédé conforme à la revendication 1,
**caractérisé en ce que**
le trou de forage (9) a la forme d'un sablier dont la taille de diamètre $d_T$ est située à la moitié de la longueur du trou de forage, ce trou de forage s'élargissant de préférence symétriquement en direction de l'ouverture d'entrée du fluide (7) et de l'ouverture de sortie du fluide (3), et les rapports entre le diamètre de l'ouverture d'entrée du fluide et le diamètre de la taille du trou de forage $d_E/d_T$ et entre le diamètre de l'ouverture de sortie du fluide et le diamètre de la taille du trou de forage $d_A/d_T$ étant de préférence dans l'intervalle de 1,3 à 2,0.

**4.** Procédé conforme à la revendication 1,
**caractérisé en ce que**
le trou de forage (9) a la forme d'un sablier dont la taille de diamètre $d_T$ est située dans la moitié supérieure du trou de forage, le rapport entre le diamètre de l'ouverture de sortie du fluide et le diamètre de la taille du trou de forage $d_A/d_T$ étant de préférence situé dans l'intervalle de 1,1 à 1,5, tandis que le rapport entre le diamètre de l'ouverture d'entrée du fluide et le diamètre de la taille du trou de forage $d_E/d_T$ est de préférence situé dans l'intervalle de 1,3 à 2,0.

**5.** Procédé conforme à l'une des revendications 1 à 4,
**caractérisé en ce que**
le processus de forage est mis en oeuvre avec un rayonnement de grande longueur d'onde, de préférence un laser au $CO_2$.

**6.** Procédé conforme à la revendication 1,
**caractérisé en ce qu'**
on réalise avec un laser à rayonnement de faible longueur d'onde, de préférence de longueur d'onde située entre 0,3 $\mu$m et 2 $\mu$m, l'étape de préforage du forage avec le diamètre $d_A$ y compris le goulot (4) de la bouteille tandis que l'on réalise avec un laser à rayonnement de grande longueur d'onde de préférence avec un laser au $CO_2$, lors de l'étape de mise en forme par forage, la partie élargie de la zone de transition (5) et la partie d'entrée de fluide (6) du forage.

**7.** Procédé conforme à la revendication 1,
**caractérisé en ce qu'**
on réalise l'étape de préforage du forage de diamètre $d_A$, y compris le goulot (4) de la bouteille par usinage par enlèvement de copeaux, usinage par étincelage ou usinage par ultrasons de précision, tandis qu'on réalise lors de l'étape de mise en forme par forage, la partie élargie de la zone de transition (5) et de la zone d'entrée de fluide (6) du forage avec un laser à rayonnement de grande longueur d'onde, de préférence un laser au $CO_2$.

**8.** Procédé conforme à la revendication 1,
**caractérisé en ce que**
lors de l'étape de préforage, on effectue avec le laser à rayonnement de faible longueur d'onde ou par usinage par enlèvement de copeaux, usinage par étincelage ou usinage par ultrasons de précision un forage transversal de la totalité de la pièce avec le diamètre libre le plus faible du trou de forage, et, lors de l'étape de mise en forme par forage, on élargit le trou de forage de la manière souhaitée avec un laser à rayonnement de grande longueur d'onde, de préférence un laser au $CO_2$.

**9.** Procédé conforme à l'une des revendications 1 à 8,
**caractérisé en ce que**
lors de l'étape de mise en forme, on utilise un laser à rayonnement de faible longueur d'onde, de préférence située dans la plage de longueur d'onde de 0,3 à 2 $\mu$m et ayant un indice K de qualité du rayonnement faible, K étant de préférence < 0,2.

**10.** Procédé conforme à l'une des revendications 1 à 9,
**caractérisé en ce que**
dans une étape supplémentaire, on élargit le trou de forage (18) présentant une symétrie de rotation dans la zone de l'ouverture de sortie du fluide (3) par des rainures (10) dont les dimensions sont situées dans les intervalles

suivants :

$$\text{largeur } b_s \text{ de la rainure} = (0,5 - 1) \text{ x diamètre de l'ouverture de sortie du fluide } d_A,$$

$$\text{longueur de la rainure } L_s = (1,5 - 3) \text{ x diamètre de l'ouverture de sortie du fluide } d_A,$$

$$\text{profondeur de la rainure } t_s = (0,1 - 0,3) \text{ x longueur du forage } L.$$

11. Procédé conforme à la revendication 10,
**caractérisé en ce que**
les rainures (10) sont obtenues, en liaison avec le forage de la partie présentant une symétrie de rotation du trou de forage (18) au moyen du laser de grande longueur d'onde, de préférence d'un laser au $CO_2$, ou du laser de faible longueur d'onde, ou par usinage par enlèvement de copeaux, usinage par étincelage, ou usinage par ultrasons de précision.

12. Procédé conforme à la revendication 9,
**caractérisé en ce que**
les trous de forage sont situés sur un cercle de trous unitaire et l'on réalise sur le cercle de trous, avant ou après, le processus de forage, soit par enlèvement de matière au moyen d'un rayonnement laser, soit par usinage par enlèvement de copeaux, usinage par étincelage ou usinage par ultrasons de précision, un évidement traversant dont la longueur $b_s$ est située dans l'intervalle (0,5 - 1) x diamètre de l'ouverture de sortie du fluide $d_A$, et ayant une profondeur $t_s$ située dans l'intervalle (0,5-2) x diamètre de l'ouverture de sortie du fluide $d_A$, la section de cet évidement présentant des formes de préférence symétriques par rapport au cercle de trous (12) telles que des formes triangulaires, rectangulaires, semi-circulaires ou similaires.

13. Procédé conforme à l'une des revendications 1 à 4,
**caractérisé en ce que**
pendant le processus de forage, le diamètre du faisceau du rayonnement laser (19) est modifié à l'emplacement de l'élément de focalisation (24).

14. Procédé conforme à l'une des revendications 1 à 4,
**caractérisé en ce que**
pendant le processus de forage, la divergence du faisceau du rayonnement laser (19) est modifiée à l'emplacement de l'élément de focalisation (24).

15. Procédé conforme à l'une des revendications 1 à 4,
**caractérisé en ce que**
pendant le processus de forage, l'indice de qualité de rayonnement du rayonnement laser (19) est modifié.

16. Procédé conforme à l'une des revendications 13 et 14,
**caractérisé en ce que**
la variation du diamètre ou de la divergence du rayonnement laser est effectuée à l'aide d'une optique d'adaptation (20).

17. Procédé conforme à la revendication 15,
**caractérisé en ce que**
l'indice de qualité de rayonnement du rayonnement laser (25) ou (26) est modifié soit dans le résonateur à laser, soit sur la trajectoire du rayonnement laser vers la lentille de focalisation (24), de préférence suite à l'incorporation sélective d'un élément optique de diffraction (33) dans la trajectoire du rayonnement laser.

18. Procédé conforme à l'une des revendications 1 à 17,
**caractérisé en ce que**

le processus de forage laser est subdivisé en deux étapes, dans la première étape, la forme de trou souhaitée étant obtenue en utilisant un premier gaz de travail, de préférence de l'oxygène qui assiste la formation de la forme du trou et accélère le processus de forage, tandis que, dans la seconde étape, la qualité de surface des parois du forage est améliorée au moyen d'un second gaz de travail, de préférence de l'argon.

Fig. 1

Fig. 2

Fig. 3

Fig. 4

a)         b)         c)

Fig. 5

a)                                                                    b)

Fig. 6

13

14

a)

Fig. 7

17

16

18

b)

13

15

a)

Fig. 8

17

16

18

b)

a)                                    b)

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10105674 A1
- DE OS3217226 A
- DE OS19745280 A
- DE OS19741029 A
- DE OS3007169 A
- DE OS2713904 A
- DE 10140533 B4
- GB 2227965 A
- DE 102004014820 B4
- DE 19905571 C1
- EP 0299143 A1
- DE 102004054587 B3
- DE OS10144088 A1